# EUROPÄISCHE PATENTSCHRIFT

(11) **EP 3 105 154 B1**
(45) Veröffentlichungstag und Bekanntmachung des Hinweises auf die Patenterteilung: **13.12.2017**
(21) Anmeldenummer: 16706971.5
(22) Anmeldetag: 17.02.2016
(51) Int. Cl.: B65G 17/12, B65G 17/42

(54) **BEFESTIGUNGSELEMENT ZUM BEFESTIGEN EINES LAUFWAGENS AN EINEM ENDLOSFÖRDERMITTEL, LAUFWAGEN, FÖRDERVORRICHTUNG UND BEFESTIGUNGSVERFAHREN**
SECURING ELEMENT FOR SECURING A CARRIAGE ON AN ENDLESS CONVEYOR, CARRIAGE, CONVEYOR APPARATUS AND SECURING METHOD
ÉLÉMENT DE FIXATION POUR FIXER UN CHARIOT À UN MOYEN TRANSPORTEUR SANS FIN, CHARIOT, DISPOSITIF TRANSPORTEUR ET PROCÉDÉ DE FIXATION

(30) Priorität: 20.02.2015 DE 102015002185
(43) Veröffentlichungstag der Anmeldung: 21.12.2016
(73) Patentinhaber: Interroll Holding AG, 6592 Sant' Antonino (CH)
(72) Erfinder: KÄSER, Uwe, 69427 Mudau (DE)
(74) Vertreter: Müller-Boré & Partner Patentanwälte PartG mbB
(86) Internationale Anmeldenummer: PCT/EP2016/000272
(87) Internationale Veröffentlichungsnummer: WO 2016/131546

(56) Entgegenhaltungen:
- EP-A1- 0 117 791
- EP-A2- 1 048 570
- DE-C- 923 777
- DE-U1-202014 007 861
- US-A- 5 791 451
- US-A- 6 129 350

## Beschreibung

Die vorliegende Erfindung betrifft ein Befestigungselement zum Befestigen eines Laufwagens an einem Endlosfördermittel einer Fördervorrichtung, einen Laufwagen mit einem derartigen Befestigungselement, der mit dem Befestigungselement an einem Endlosfördermittel einer Fördervorrichtung befestigbar ist, eine Fördervorrichtung mit wenigstens einem Endlosfördermittel und wenigstens einem Laufwagen, der mit dem Befestigungselement an dem Endlosfördermittel befestigt ist, sowie ein Verfahren zum Befestigen eines Laufwagens an einem Endlosfördermittel einer Fördervorrichtung.

Fördervorrichtungen mit Endlosfördermitteln und Laufwagen, die von den Endlosfördermitteln bewegt bzw. transportiert werden, sind beispielsweise aus der EP 0 930 248 B1 oder der EP 1 375 390 A2 bekannt. Darüber hinaus ist eine Vielzahl weiterer Fördervorrichtungen bekannt, bei denen Laufwagen entlang einer zumeist umlaufenden, geschlossenen und daher endlosen Förderstecke transportiert werden. Hierzu weisen die Fördervorrichtungen Endlosfördermittel in Form von Ketten, Gummiketten oder Keilriemen auf, mit denen die Laufwagen verbunden sind und von denen die Laufwagen gezogen und oftmals auch getragen werden. Für die Verbindung zwischen Endlosfördermitteln mit Laufwagen ist es beispielsweise bekannt, längliche Blattfedern vorzusehen, die sowohl mit dem Endlosfördermittel als auch mit dem Laufwagen verbunden sind. Aufgrund der Elastizität der Blattfedern lassen sich Laufwagen von dem Endlosfördermittel insbesondere an Umlenkstellen des Förderweges entlang von senkrechten, halbkreisförmigen Wegabschnitten befördern, ohne dass es zu größeren mechanischen Beanspruchungen der Laufwagen kommt, sofern der Durchmesser des Wegabschnittes im Vergleich zur Erstreckung des Laufwagens in Förderrichtung ausreichend groß ist. Für halbkreisförmige Wegabschnitte kleineren Durchmessers können jedoch selbst Blattfedern mechanische Beanspruchungen nicht vom Laufwagen abhalten, so dass sich dieser beim Durchlaufen des halbkreisförmigen Wegabschnittes verziehen bzw. verformen kann. Schlimmstenfalls führen derartige mechanische Einwirkungen zu einem Stillstand oder einer Beschädigung der Fördervorrichtung. Auch weil der von einer Fördervorrichtung beanspruchte Raum ein kritischer wirtschaftlicher Faktor ist, sind möglichst kleine Umkehrwege für die Laufwagen wünschenswert, d.h. es ist gewünscht, dass halbkreisförmige Wegabschnitte mit möglichst kleinen Durchmessern von Laufwagen problemlos durchlaufen werden können. DE 923 777 C beschreibt ein gattungsgemäßes Befestigungselement. Es ist daher die Aufgabe der vorliegenden Erfindung, ein Befestigungselement, einen Laufwagen, eine Fördervorrichtung und ein Verfahren zum Befestigen eines Laufwagens an einem Endlosfördermittel einer Fördervorrichtung zu schaffen, wobei es Laufwagen ermöglicht wird, halbkreisförmige Wegabschnitte auch dann ohne Beeinträchtigungen zu durchlaufen, wenn deren Durchmesser im Vergleich zur Erstreckung des Laufwagens in Förderrichtung gering ist. Insbesondere ist es eine Aufgabe der Erfindung Relativbewegungen zwischen Endlosfördermittel und Laufwagen zuzulassen bzw. größere Relativbewegungen zwischen Endlosfördermittel und Laufwagen zu ermöglichen.

Diese Aufgabe wird durch das Befestigungselement mit den Merkmalen des Anspruchs 1, durch den Laufwagen mit den Merkmalen des Anspruchs 5, durch die Fördervorrichtung mit den Merkmalen des Anspruchs 7 und durch das Verfahren mit den Merkmalen des Anspruchs 8 gelöst. Bevorzugte Ausführungsbeispiele sind Gegenstand der abhängigen Ansprüche.

Bei der vorliegenden Erfindung umfasst das Befestigungselement zwei gelenkig miteinander verbundene Gelenkteile, von denen ein erstes Gelenkteil an dem Endlosfördermittel angelenkt bzw. mit diesem gelenkig verbunden ist, während ein zweites der Gelenkteile mit dem Laufwagen verbunden ist. Hierdurch sind das erste Gelenkteil und das zweite Gelenkteil relativ zum Endlosfördermittel beweglich und zumindest das erste Gelenkteil ist zudem relativ zum Laufwagen beweglich. Infolge dieser beiden Gelenkverbindungen erhält der Laufwagen eine große Bewegungsfreiheit relativ zum Endlosfördermittel. Beim Durchlaufen von halbkreisförmigen Wegabschnitten, deren Durchmesser im Vergleich zur Erstreckung des Laufwagens in Förderrichtung gering ist, kann sich der Laufwagen daher allmählich teilweise oder gar ganz von dem Endlosfördermittel lösen, so dass mechanische Beanspruchungen des Laufwagens oder des Endlosfördermittels vermieden werden. Dabei kann das Endlosfördermittel den Laufwagen über das Befestigungselement sowohl ziehend als auch schiebend bewegen. Ganz allgemein ist die Richtung, in welcher der Laufwagen vom Endlosfördermittel bewegt oder transportiert wird, für das Befestigungselement bzw. die gelenkigen Verbindungen zwischen Endlosfördermittel und Befestigungselement und zwischen den beiden Gelenkteilen des Befestigungselements unerheblich.

Vorteilhafterweise kann durch die gelenkige Verbindung eine Überlastung einer herkömmlichen Verbindung von Endlosfördermittel und Laufwagen vermieden werden. Insbesondere können Überlastungen von herkömmlichen Blattfedern, wie sie durch eine starke Auslenkung aufgrund von durch Toleranzen beeinflusste Relativbewegungen entstehen können, vermieden werden. Ebenso wird verhindert, dass herkömmliche Blattfedern bei manueller Bewegung des Laufwagens, d.h. bei Lastwechsel, aus knicken.

Vorzugsweise ist bei einer erfindungsgemäßen Fördervorrichtung das erste Gelenkteil derart an dem Endlosfördermittel angelenkt, dass es um eine zur Förderrichtung des Endlosfördermittels senkrechte erste Drehachse drehbar ist, und das erste und zweite Gelenkteil sind derart gelenkig miteinander verbunden, dass sie um eine zur Förderrichtung des Endlosfördermittels senkrechte und von der ersten Drehachse beabstandete zweite Drehachse drehbar sind. Bei dem Endlosfördermittel kann es sich um ein beliebiges Endlosfördermittel handeln sofern es dazu geeignet ist, mit dem ersten Gelenkteil gelenkig verbunden zu werden.

Insbesondere kann es sich bei dem Endlosfördermittel um eine Förderkette oder Kette oder um eine Gummikette handeln.

Der Gewindeabschnitt kann eine relativ zum Mittelteil kleinere größte Quererstreckung aufweisen. Das Befestigungselement umfasst wenigstens zwei zueinander parallele Flächenabschnitte, wobei ein erster der Flächenabschnitte mit einem ersten Durchgangsloch vorgesehen ist und ein zweiter der Flächenabschnitte mit einem zweiten Durchgangsloch vorgesehen ist, wobei in dem ersten Durchgangsloch eine erste Lagerbuchse bzw. Gelenkbuchse vorgesehen ist und in dem zweiten Durchgangsloch eine zweite Lagerbuchse bzw. Gelenkbuchse vorgesehen ist. Erfindungsgemäß ist in der ersten Lagerbuchse die Distanzhülse angeordnet, so dass diese zusammen mit der ersten Lagerbuchse ein erstes Gleitlager bildet. Erfindungsgemäß ist in der zweiten Lagerbuchse der Bolzenkopf bzw. Schraubenkopf angeordnet, so dass dieser zusammen mit der zweiten Lagerbuchse ein zweites Gleitlager bildet. Das Befestigungselement kann weiterhin bevorzugt derart ausgebildet sein, das für wenigstens eine der gelenkigen Verbindungen ein längliches Bolzenelement, das einen Mittelteil mit einer größten Quererstreckung, einen ein Gewinde aufweisenden Gewindeendabschnitt mit einer relativ zum Mittelteil kleineren größten Quererstreckung und diesem entgegengesetzt einen eine Anschlagsfläche aufweisenden Anschlagsflächenendabschnitt mit einer relativ zum Mittelteil größeren größten Quererstreckung aufweist, und wenigstens zwei zueinander parallele Flächenabschnitte umfasst, und wobei ein erster der Flächenabschnitte mit einem ersten Durchgangsloch vorgesehen ist, dessen größte Quererstreckung kleiner als die größte Quererstreckung des Mittelteils des Bolzenelements und größer oder gleich der größten Quererstreckung des Gewindeendabschnitts des Bolzenelements ist, und ein zweiter der Flächenabschnitte mit einem zweiten Durchgangsloch vorgesehen ist, dessen größte Quererstreckung kleiner als die größte Quererstreckung der Anschlagsfläche des Bolzenelements und größer oder gleich der größten Quererstreckung des Mittelteils des Bolzenelements ist.

Bevorzugt durchstößt das Bolzenelement das erste Durchgangsloch und das zweite Durchgangsloch, wobei der Gewindeendabschnitt auf einer dem zweiten Flächenabschnitt abgewandten Seite des ersten Flächenabschnitts aus dem ersten Durchgangsloch hinausragt und eine Schraubenmutter auf dem Gewinde aufgeschraubt ist.

Sofern das Bolzenelement für die gelenkige Verbindung zwischen dem Befestigungselement und dem Endlosfördermittel vorgesehen ist, sind die ersten und zweiten Flächenabschnitte Teile des ersten Gelenkteils. Ist das Bolzenelement für die gelenkige Verbindung zwischen dem ersten und dem zweiten Gelenkteil vorgesehen, so können die ersten und zweiten Flächenabschnitte Teile des ersten Gelenkteils sein oder sie können Teile des zweiten Gelenkteils sein oder jeder der Flächenabschnitte kann Teil eines anderen der Gelenkteile sein. Für die gelenkige Verbindung zwischen dem Befestigungselement und dem Endlosfördermittel durchstößt das Bolzenelement zudem ein im Endlosfördermittel ausgebildetes Durchgangsloch mit einer größten Quererstreckung, die größer oder gleich der größten Quererstreckung des Mittelteils und kleiner der größten Quererstreckung des Anschlagsflächenendabschnitts und/oder des Bolzenkopfes ist. Bei der gelenkigen Verbindung zwischen dem ersten und dem zweiten Gelenkteil durchstößt das Bolzenelement hingegen wenigstens ein Durchgangsloch, das in wenigstens einem Anlenkabschnitt eines der Gelenkteile ausgebildet ist und das eine größte Quererstreckung hat, die größer oder gleich der größten Quererstreckung des Mittelteils und kleiner der größten Quererstreckung des Anschlagsflächenendabschnitts ist. Beispielsweise kann der Anlenkabschnitt durch einen, zwei oder mehrere Flächenabschnitte gebildet sein, die den beschriebenen Flächenabschnitten ähnlich sind. Bei dieser Ausführungsform der vorliegenden Erfindung ist durch die besonderen Abmessungen des Bolzenelementes und der Durchgangslöcher nicht nur eine einfache und verlässliche gelenkige Verbindung zwischen Befestigungselement und Endlosfördermittel oder zwischen den Gelenkteilen realisiert, es ist auch gewährleistet, dass die Schraube lediglich soweit angezogen werden kann, so dass ein Verbiegen der Flächenabschnitte oder eine Beeinträchtigung der Beweglichkeit der Gelenkteile durch ein übermäßig starkes Anziehen der Schraube vermieden werden kann.

Bei einer bevorzugten Ausführungsform des Befestigungselements weist das Befestigungselement wenigstens ein Dämpfungsmittel zum Dämpfen von Anschlägen des Befestigungselements an dem Endlosfördermittel auf. Mit dem Dämpfungsmittel wird insbesondere eine Schallentstehung beim Anschlagen des Befestigungselements an dem Endlosfördermittel gedämpft, um einen möglichst geräuscharmen Betrieb einer Förderanlage mit einem derartigen Befestigungselement zu gewährleisten. Zum Anschlagen des Befestigungselements an dem Endlosfördermittel kommt es häufig während eines Rücklaufs des Endlosfördermittels, da dieses dann durchhängen kann.

Die Gelenkteile des Befestigungselements können wenigstens teilweise aus einem im Wesentlichen starren Material wie Metall oder Kunststoff gefertigt sein, sie können aber auch wenigstens teilweise aus einem elastischen Material gefertigt sein. Besonders bevorzugt ist wenigstens eines der Gelenkteile aus einem Blechmaterial bzw. Metallblech hergestellt. Es können aber auch beide Gelenkteile aus einem derartigen Material hergestellt sein. So kann ein Gelenkteil einfach aus einem Blechmaterial ausgestanzt oder ausgeschnitten werden. Es ist auch möglich, zunächst einen flachen Rohling aus dem Blechmaterial auszustanzen oder auszuschneiden und diesen Rohling anschließend durch Biegen entsprechender Abschnitte in eine endgültige Form des Gelenkteils zu bringen.

Vorteilhaft weist das Befestigungselement wenigstens teilweise einen U-förmigen Querschnitt auf. Beispielsweise kann das Befestigungselement durchgehend einen U-förmigen Querschnitt aufweisen oder es kann wenigstens eines der Gelenkteile wenigstens teilweise oder durchgehend einen U-förmigen Querschnitt aufweisen oder es können beide Gelenkteile wenigstens teilweise oder durchgehend einen U-förmigen Querschnitt aufweisen. Ein U-förmiger Querschnitt der Gelenkteile ist beispielsweise dann bevorzugt, wenn es sich bei dem Endlosfördermittel um eine Förderkette handelt, da dann Kettenglieder der Förderkette in jeweiligen Abschnitten mit dem U-förmigen Querschnitt aufgenommen werden können, was sich vorteilhaft auf eine Stabilisierung des mittels des Befestigungselements mit dem Endlosfördermittel befestigten Laufwagens in Richtungen senkrecht zur Förderrichtung des Endlosfördermittels auswirkt.

Ganz allgemein kann es sich bei dem Laufwagen um einen beliebigen Laufwagen handeln, beispielsweise um einen Behälter für Schüttgut oder Stückgut. Besonders bevorzugt weist der Laufwagen jedoch eine Sortiereinrichtung oder Quersortiereinrichtung auf. Derartige Sortiereinrichtungen oder Quersortiereinrichtungen können jeweils ein quer zum Förderweg antreibbares Gurtband aufweisen, das jeweils über Umlenkrollen mit sich in Richtung des Förderweges erstreckenden Drechachsen geführt ist. Ein Querantrieb der Gurtbänder kann auf bekannte Weise durch entsprechende wahlweise zur Zusammenwirkung bringbare Antriebsmittel erfolgen.

Nachfolgend wird eine bevorzugte Ausgestaltung der Erfindung unter Zuhilfenahme von Figuren näher erläutert. Es zeigen:
- Figur 1: eine Seitenansicht eines Befestigungselements;
- Figur 2: das Befestigungselement der Figur 1 von unten;
- Figur 3: eine Vorderansicht des Befestigungselements der Figur 1;
- Figur 4: eine Rückansicht des Befestigungselements der Figur 1;
- Figur 5: ein erstes Gelenkteil des Befestigungselements der Figur 1;
- Figur 6a: ein Bolzenelement;
- Figur 6b: einen Querschnitt des ersten Gelenkteils des Befestigungselements der Figur 1;
- Figur 7: ein zweites Gelenkteil des Befestigungselements der Figur 1;
- Figur 8: einen Teil einer Fördervorrichtung.

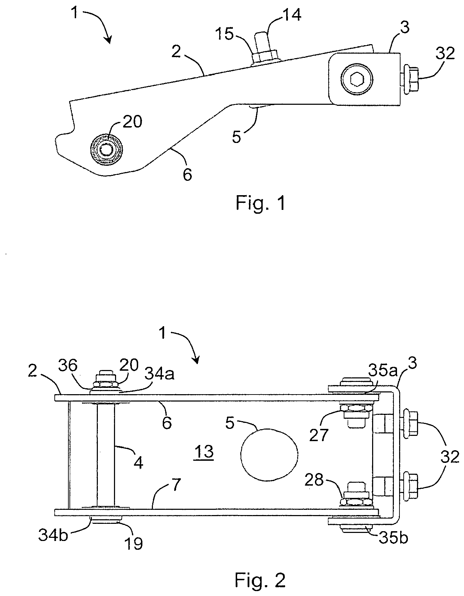

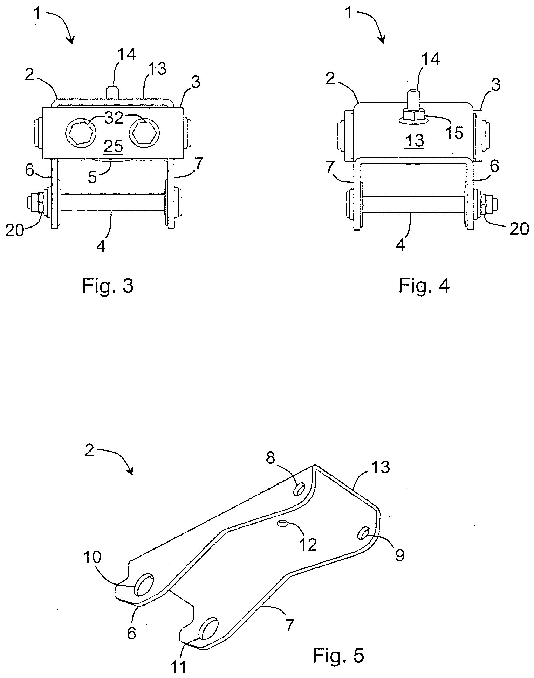

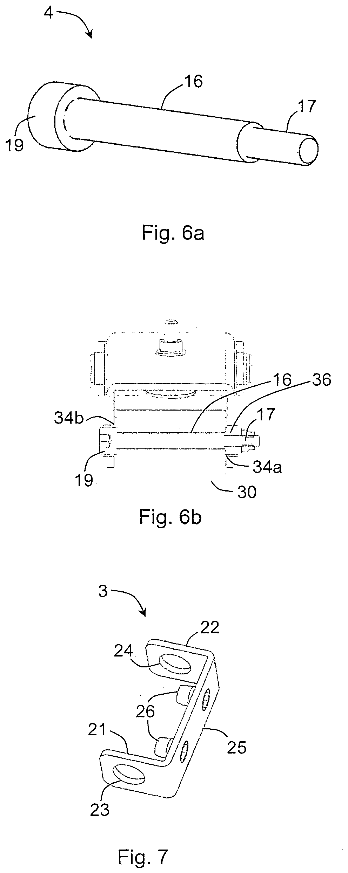

In den Figuren 1 bis 4 ist ein erfindungsgemäßes Befestigungselement 1 zum Befestigen eines Laufwagens an einem Endlosfördermittel einer Fördervorrichtung in verschiedenen Ansichten zu sehen. Das Befestigungselement 1 umfasst ein erstes Gelenkteil 2, das in der Figur 5 räumlich dargestellt ist, und ein zweites Gelenkteil 3, das in der Figur 7 räumlich dargestellt ist, die gelenkig miteinander verbunden sind, sowie ein längliches Bolzenelement 4, das in der Figur 6 räumlich dargestellt ist, und ein Dämpfungselement 5.

Das erste Gelenkteil 2 ist länglich und hat einen U-förmigen Querschnitt, wobei das U-Profil in der Figur 1 nach unten offen ist. Jedoch ändert sich die Schenkellänge des U-Profils über die Länge des ersten Gelenkteils 2 derart, dass einander parallele Seitenwände 6 und 7 des ersten Gelenkteils 2 einen V-förmigen Verlauf zeigen. An einem dem zweiten Gelenkteil 3 zugewandten Endabschnitt des ersten Gelenkteils 2 ist ein erstes Durchgangsloch 8 in der Seitenwand 6 ausgebildet und in der Seitenwand 7 ist ein zweites Durchgangsloch 9 ausgebildet, wobei die Durchgangslöcher 8 und 9 miteinander fluchten. Auch an einem vom zweiten Gelenkteil 3 abgewandten Endabschnitt des ersten Gelenkteils 2 ist ein drittes Durchgangsloch 10 in der Seitenwand 6 ausgebildet, während in der Seitenwand 7 ein viertes Durchgangsloch 11 ausgebildet ist. Auch das dritte Durchgangsloch 10 und das vierte Durchgangsloch 11 fluchten miteinander. Ein fünftes Durchgangsloch 12 ist in einer die Seitenwände 5 verbindenden Bodenwand 13 des ersten Gelenkteils 2 vorgesehen.

In Durchgangsloch 10 ist eine Lagerbuchse 34a eines Gleitlager eingepresst. In Durchgangsloch 11 ist eine Lagerbuchse 34b eines Gleitlagers eingepresst. Entsprechend ist in Durchgangsloch 8 eine Lagerbuchse 35a eines Gleitlagers eingepresst und in Durchgangsloch 9 eine Lagerbuchse 35b eines Gleitlagers eingepresst.

Bei dem Dämpfungselement 5 handelt es sich um einen Gummipuffer, der an einer den Seitenwänden 6 und 7 zugewandten Seite an der Bodenwand 13 des ersten Gelenkteils 2 angeordnet ist. Mittels einer das Durchgangsloch 12 in der Bodenwand 13 durchstoßenden Schraube 14 und einer an der den Seitenwänden 6 und 7 abgewandten Seite der Bodenwand 13 aufgeschraubten Mutter 15 ist der Gummipuffer an der Bodenwand 13 befestigt.

Das in der Fig. 6a dargestellte Bolzenelement 4 runden Querschnitts weist einen Mittelteil 16, einen ein Gewinde aufweisenden Gewindeendabschnitt 17 und diesem entgegengesetzt einen Schraubenkopf 19 auf. Dabei ist der Durchmesser des Mittelteils 16 größer als der Durchmesser des Gewindeendabschnitts 17, jedoch kleiner als der Durchmesser des Schraubenkopfes 19. Entsprechend den Abmessungen des Bolzenelements 4 sind die Durchmesser des dritten Durchgangsloches 10 und des vierten Durchgangsloches 11 in den Seitenflächen 6 und 7 dimensioniert, die an dem dem zweiten Gelenkteil 3 abgewandten Endabschnitt des ersten Gelenkteils 2 ausgebildet sind. Vorzugsweise weisen Durchgangsloch 10 und Durchgangsloch 11 einen identischen Durchmesser auf. Der Durchmesser des vierten Durchgangsloches 11 ist größer als der Durchmesser des Schraubenkopfes 19, so dass der Schraubenkopf 19 zumindest teilweise in dem vierten Durchgangsloch 11 aufnehmbar ist. In dem vierten Durchgangsloch 11 ist die Lagerbuchse 34b des Gleitlagers angeordnet. Der zylindrische Schraubenkopf 19 dient als Wellenabschnitt für das Gleitlager, dessen Lagerbuchse 34b in das vierte Durchgangsloch 11 des Befestigungslements 1 eingepresst ist.

Das dritte Durchgangsloch 10 in der Seitenwand 7 hat einen Durchmesser, der größer ist, als der Durchmesser einer an dem Gewindeendabschnitt 17 angeordneten Distanzhülse 36. Somit kann die Distanzhülse 36 zumindest teilweise in dem dritten Durchgangsloch 10 aufnehmbar sein. Insbesondere kann die Distanzhülse 36 als Wellenabschnitt für das Gleitlager dienen.

Mit dem Gewindeendabschnitt 17 voraus ist das Bolzenelement 4 zunächst durch das vierte Durchgangsloch 11 und anschließend durch das dritte Durchgangsloch 10 gesteckt, so dass es das vierte Durchgangsloch 11 und das dritte Durchgangsloch 10 durchstößt und der Gewindeendabschnitt 17 an einer der Seitenwand 7 abgewandten Seite der Seitenwand 6 aus dem dritten Durchgangsloch 10 hinausragt. Die Distanzhülse 36 ist bereits während des Anordnens des Bolzenelements 4 oder nachdem das Bolzenlement 4 angeordnet ist, an dem Gewindeendabschnitt 17 angeordnet. Eine Schraubenmutter 20 ist auf das Gewinde des aus dem dritten Durchgangsloch 10 hinausragenden Gewindeendabschnitt 17 aufgeschraubt. Die Distanzhülse 36 hat einen Aussendurchmesser der gleich ist zu dem Aussendurchmesser des Schraubenkopfes 19. Die Distanzhülse 36 hat einen Innendurchmesser, der kleiner ist als der Aussendurchmesser des Mittelteils 16 des Bolzenlements 4. Somit ist die Bewegung der Distanzhülse aufgrund des Mittelteils 16 einerseits und aufgrund der Schraubenmutter 20 andererseits beschränkt. Ebenso beschränkt die Distanzhülse 36 im wesentlichen den Schraubweg der Schraubenmutter 20 auf dem Gewindeendabschnitt 17. Es ist somit möglich, dass die Schraubenmutter 20 an dem Bolzenlement 4 bei vorgegebenen Schraubweg festschraubbar ist, ohne dass Kräfte auf das Gelenkteil 2 übertragen werden. Das Gelenkteil 2 wird somit vorteilhafterweise nicht verformt.

Fig. 6b zeigt eine Schnittansicht des ersten Gelenkteils mit daran angeordneter Förderkette 30. Es ist ersichtlich, dass Schraubenkopf 19 als Wellenabschnitt in dem Gleitlager und das Gleitlager, insbesondere die Lagerbuchse 34b des Gleitlagers wiederum in dem vierten Durchgangsloch 11 angeordnet ist. An der gegenüberliegenden Seite ist Lagerbuchse 34a eines Gleitlagers in Durchgangsloch 10 angeordnet und Distanzhülse 36, deren Aussendurchmesser identisch zu dem

Aussendurchmesser des Schraubenkopfes 19 ist, in der Gelenkbuchse bzw. Lagerbuchse 34a als Wellenabschnitt des Gleitlagers angeordnet. Somit bildet das Bolzenelement 4 eine Drehachse um die das Befestigungselement 1 relativ zu der Förderkette 30 drehbar ist.

Wie aus Fig. 6b ersichtlich ist, wird das Bolzenelement 4 dadurch gehalten, dass der jeweilige Aussendurchmesser des Schraubenkopf 19 und der Distanzhülse 36 größer ist, als der Durchmesser des Durchgangsloches der Förderkette, durch das das Bolzenlement 4 durchgeführt ist. Dadurch wird eine Translation des Bolzenelements entlang des Durchgangsloches verhindert. Ferner wird das Bolzenlement mittels der Durchgangslöcher 10 und 11 in dem Befestigungselement 1 gehalten.

Ähnlich dem ersten Gelenkteil 2 ist auch das in der Fig. 7 zu sehende zweite Gelenkteil 3 mit einem U-förmigen Profil ausgebildet. Im Vergleich zum ersten Gelenkteil 2 ist das zweite Gelenkteil 3 jedoch kürzer, wobei seine Länge im Wesentlichen einer Länge der Seitenwände 6 und 7 des ersten Gelenkteils 2 an dessen dem zweiten Gelenkteil 3 zugewandten Endabschnitt entspricht. Zwei parallele Seitenwände 21 und 22 des zweiten Gelenkteils 3 bilden die Schenkel des U-Profils. In der Seitenwand 21 des zweiten Gelenkteils 3 ist ein Durchgangsloch 23 ausgebildet und in der Seitenwand 22 des zweiten Gelenkteils 3 ist ein Durchgangsloch 24 ausgebildet, die miteinander fluchten. Durchgangsloch 21 und Durchgangsloch 23 weisen einen identischen Durchmesser auf. Insbesondere weisen Durchgangsloch 21, Durchgangsloch 23, Durchgangsloch 10 und Durchgangsloch 11 einen identischen Durchmesser auf.

Eine Bodenplatte 25 verbindet die Seitenwände 21 und 22. An eine den Seitenwänden 21 und 22 des zweiten Gelenkteils 3 zugewandten Seite springen zwei Vorsprünge 26 mit Innengewinde hervor, die zu einer von den Seitenwänden 21 und 22 abgewandten Seite der Bodenplatte 25 hin offen sind.

Im in der Fig. 1 gezeigten zusammengebauten Zustand des Befestigungselements 1 ist das zweite Gelenkteil 3 gegenüber dem ersten Gelenkteil 2 um 90° verkippt, so dass die einander parallelen Seitenwände 21 und 22 des zweiten Gelenkteils 3 dem ersten Gelenkteil 2 zugewandt sind und der dem zweiten Gelenkteil 3 zugewandte Endabschnitt des ersten Gelenkteils 2 zwischen den Seitenwänden 21 und 22 des zweiten Gelenkteils 3 aufgenommen ist. Hierbei fluchtet das erste Durchgangsloch 8 mit dem Durchgangsloch 23 und das zweite Durchgangsloch 9 fluchtet mit dem Durchgangsloch 22. Alle Durchgangslöcher 8, 23, 9 und 22 fluchten miteinander und bilden eine Drehachse.

Eine Schraubenverbindung 27 erstreckt sich durch die fluchtenden Durchgangslöcher 8 und 23 und eine Schraubenverbindung 28 erstreckt sich durch die fluchtenden Durchgangslöcher 9 und 24. Mittels der Schraubenverbindungen 27 und 28 sind das erste Gelenkteil 2 und das zweite Gelenkteil 3 gelenkig miteinander verbunden, so dass jedes der Gelenkteile 2 und 3 relativ zum jeweils anderen Gelenkteil 2 und 3 um diese Schraubenverbindungen 27 und 28 herum drehbar ist. Weiterhin sind in den Durchgangslöchern 8 und 9 die Lagerbuchsen bzw. Gelenkbuchsen 35a und 36 angeordnet, die zusammen mit entsprechenden Schraubenköpfen und/oder Distanzhülsen Gleitlager bilden.

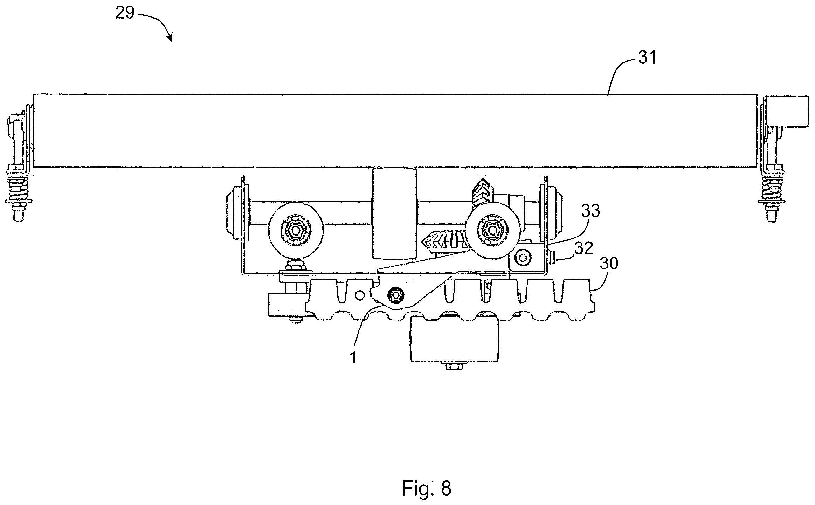

In der Figur 8 ist dargestellt, wie mit dem beschriebenen Befestigungselement 1 ein Laufwagen 29 an einem Endlosfördermittel einer Fördervorrichtung befestigt wird. Aus Gründen der Übersichtlichkeit ist nur ein kleiner Ausschnitt der Fördervorrichtung gezeigt. Zu sehen ist ein Abschnitt des Endlosfördermittels, bei dem es sich im vorliegenden Fall um eine Förderkette 30 handelt, sowie ein Teil des Laufwagens 29, der eine an sich bekannte Quersortiereinrichtung 31 aufweist, die daher nicht im Einzelnen beschrieben wird.

Wie in der Figur 8 zu sehen ist, ist der Laufwagen 29 oberhalb der Förderkette 30 angeordnet. Zwischen Laufwagen 29 und Förderkette 30 ist das Befestigungselement 1 angeordnet und sowohl mit dem Laufwagen 29 als auch mit der Förderkette 30 verbunden. Am Laufwagen 29 ist das Befestigungselement 1 mittels zweier Schrauben 32 befestigt, die eine Gehäusewand 33 des Laufwagens 29 durchstoßend mit den Innegewinden der Vorsprünge 26 in Eingriff stehen, wodurch das zweite Gelenkteil 3 mit seiner Bodenwand 25 an der Gehäusewand 33 fixiert ist. Hingegen ist das Befestigungselement 1 an der Förderkette 30 beweglich angelenkt. Hierzu ist in einem Glied der Förderkette 30 ein in der Figur 8 nicht zu sehendes Durchgangsloch vorgesehen, das für den Gewindeendabschnitt 17 und den Mittelteil 16 des Bolzenelements 4 durchlässig ist. Zum Befestigen des Befestigungselements 1 an der Förderkette 30 wird das Bolzenelement 4 von den Seitenflächen 6 und 7 des ersten Gelenkteils 2 entfernt. Das Glied mit dem Durchgangsloch wird zwischen den Seitenflächen 6 und 7 des ersten Gelenkteils 2 angeordnet, so dass das Durchgangsloch des Gliedes mit dem dritten Durchgangsloch 10 und dem vierten Durchgangsloch 11 in den Seitenwänden 6 und 7 des ersten Gelenkteils 2 fluchtet. Das Bolzenelement 4 wird mit dem Gewindeendabschnitt 17 voraus durch das vierte Durchgangsloch 11, das Durchgangsloch im Glied und das dritte Durchgangsloch 10 gesteckt. Die Distanzhülse 36 wird an dem Gewindeendabschnitt 17 angeordnet. Das Bolzenlement 4 kann auch mit daran angeordneter Distanzhülse 36 durch die Durchgangslöcher 10, 11 und das Loch der Forderkette 30 gesteckt werden. Anschließend wird die Schraubenmutter 20 auf das Gewinde des aus dem dritten Durchgangsloch 11 ragenden Gewindeendabschnitts 17 aufgeschraubt und festgezogen. Dadurch, dass die Distanzhülse 36 an dem Mittelteil 16 des Bolzenelements 4 stößt, ist gewährleistet, dass die Schraubenmutter 20 nicht zu fest angezogen werden kann und dadurch die Seitenwände 6 und 7 des ersten Gelenkteils 2 möglicherweise verbogen oder verzogen werden, oder gar die Beweglichkeit bzw. Drehbarkeit des ersten Gelenkteils 2 relativ zur Förderkette 30 eingeschränkt wird. Vielmehr legt die Distanzhülse 36 den Schraubweg der Schraubenmutter 19 am Gewinde des Gewindeendabschnitts 17 fest.

Nach Befestigen des Laufwagens 29 an der Förderkette 30 mittels des Befestigungselements 1 sind das erste Gelenkteil 2 und das zweite Gelenkteil 3 relativ zur Förderkette 30 beweglich und das erste Gelenkteil 2 ist zudem relativ zum Laufwagen 29 beweglich. Infolge der Gelenkverbindung zwischen dem ersten Gelenkteil 2 und dem zweiten Gelenkteil 3 und der Gelenkverbindung zwischen der Förderkette 30 und dem ersten Gelenkteil 2 erhält der Laufwagen 29 eine große Bewegungsfreiheit relativ zur Förderkette 30. Beim Durchlaufen von halbkreisförmigen Wegabschnitten, deren Durchmesser im Vergleich zur Erstreckung des Laufwagens 29 in Förderrichtung gering ist, kann sich der Laufwagen 29 daher allmählich von der Förderkette 30 wegbewegen oder seine Ausrichtung zur Förderkette 30 verändern, wobei aufgrund des Befestigungselements 1 der Laufwagen 29 mit der Förderkette 30 verbunden bleibt. Die gelenkige Ausbildung des Befestigungselements 1 ermöglicht jedoch diese Relativbewegung von Laufwagen 29 und Förderkette 30, wobei Verspannungen des Laufwagens 29 oder der Förderkette 30 reduziert oder gar vermieden werden. Dabei kann die Förderkette 30 den Laufwagen 29 über das Befestigungselement 1 sowohl ziehend als auch schiebend bewegen.

### Bezugszeichenliste

- 1: Befestigungselement
- 2: erstes Gelenkteil
- 3: zweites Gelenkteil
- 4: Bolzenelement
- 5: Dämpfungselement
- 6: Seitenwand
- 7: Seitenwand
- 8: erstes Durchgangsloch
- 9: zweites Durchgangsloch
- 10: drittes Durchgangsloch
- 11: viertes Durchgangsloch
- 12: fünftes Durchgangsloch
- 13: Bodenwand
- 14: Schraube
- 15: Mutter
- 16: Mittelteil
- 17: Gewindeendabschnitt
- 19: Schraubenkopf
- 20: Schraubenmutter
- 21: Seitenwand
- 22: Seitenwand
- 23: Durchgangsloch
- 24: Durchgangsloch
- 25: Bodenplatte
- 26: Vorsprung
- 27: Schraubenverbindung
- 28: Schraubenverbindung
- 29: Laufwagen
- 30: Förderkette
- 31: Quersortiereinrichtung
- 32: Schraube
- 33: Gehäusewand
- 34a: Lagerbuchse
- 34b: Lagerbuchse
- 35a: Lagerbuchse
- 35b: Lagerbuchse
- 36: Distanzhülse

## Patentansprüche

1. Befestigungselement (1) zum Befestigen eines Laufwagens (29) an einem Endlosfördermittel (30) einer Fördervorrichtung, das wenigstens zwei gelenkig miteinander verbundene Gelenkteile (2, 3) umfasst, wobei ein erstes der Gelenkteile (2) zum Anlenken des Befestigungselements (1) an dem Endlosfördermittel (30) und ein zweites der Gelenkteile (3) zum Verbinden des Befestigungselements (1) mit dem Laufwagen (29) eingerichtet ist,
**dadurch gekennzeichnet, dass** das Befestigungselement (1) wenigstens
ein längliches Bolzenelement (4), das einen Mittelteil (16), einen ein Gewinde aufweisenden Gewindeendabschnitt (17), diesem entgegengesetzt einen Bolzenkopf (19), und eine Distanzhülse (36) aufweist und
wenigstens zwei zueinander parallele Flächenabschnitte (6, 7) umfasst, wobei ein erster der Flächenabschnitte (6) mit einem ersten Durchgangsloch (10) vorgesehen ist und ein zweiter der Flächenabschnitte (7) mit einem zweiten Durchgangsloch (11) vorgesehen ist, wobei in dem ersten Durchgangsloch (10) eine erste Lagerbuchse (34a) vorgesehen ist und in dem zweiten Durchgangsloch (11) eine zweite Lagerbuchse (34b) vorgesehen ist und wobei
in der ersten Lagerbuchse (34a) die Distanzhülse (36) angeordnet ist und zusammen mit der ersten Lagerbuchse (34a) ein erstes Gleitlager bildet und wobei
in der zweiten Lagerbuchse (34b) der Bolzenkopf (19) angeordnet ist und zusammen mit der zweiten Lagerbuchse (34b) ein zweites Gleitlager bildet.

2. Befestigungselement (1) nach Anspruch 1 mit wenigstens einem Dämpfungsmittel (5) zum Dämpfen von Anschlägen des Befestigungselements (1) an dem Endlosfördermittel (30).

3. Befestigungselement (1) nach einem der vorhergehenden Ansprüche, bei dem wenigstens ein Gelenkteil (2, 3) aus einem Blechmaterial hergestellt ist.

4. Befestigungselement (1) nach einem der vorhergehenden Ansprüche, das wenigstens teilweise einen U-förmigen Querschnitt aufweist.

5. Laufwagen (29) mit einem Befestigungselement (1) nach einem der Ansprüche 1 bis 4, der mit dem Befestigungselement (1) an einem Endlosfördermittel (30) einer Fördervorrichtung befestigbar ist, wobei das zweite Gelenkteil (3) mit einem Teil (33) des Laufwagens (29) verbunden ist.

6. Laufwagen (29) nach Anspruch 5, der eine Sortiereinrichtung oder Quersortiereinrichtung (31) aufweist.

7. Fördervorrichtung mit wenigstens einem Endlosfördermittel (30) und wenigstens einem Laufwagen (29) nach einem der Ansprüche 5 oder 6, der mit dem Befestigungselement (1) an dem Endlosfördermittel (30) befestigt ist, wobei das Endlosfördermittel (30) dazu eingerichtet ist, den Laufwagen (29) entlang eines vorgegebenen Förderweges zu bewegen.

8. Verfahren zum Befestigen eines Laufwagens (29) an einem Endlosfördermittel (30) einer Fördervorrichtung, bei dem ein Befestigungselement (1) nach einem der Ansprüche 1 bis 4 vorgesehen wird und ein erstes der Gelenkteile (2) des Befestigungselementes (1) an dem Endlosfördermittel (30) angelenkt und ein zweites der Gelenkteile (3) des Befestigungselementes (1) mit wenigstens einem Verbindungsmittel (32) mit dem Laufwagen (29) verbunden wird.

## Claims

1. A securing element (1) for securing a carriage (29) to an endless conveyor (30) of a conveyor apparatus, comprising at least two articulated joint portions (2, 3) coupled to each other, wherein a first one of the joint portions (2) is arranged for articulating the securing element (1) at the endless conveyor (30) and a second one of the joint portions (3) is arranged for coupling the securing element (1) to the carriage (29),
**characterized in that** the securing element (1) comprises at least
an elongate bolt member (4) comprising a central part (16), a threaded end portion (17) comprising threads, a bolt head (19) opposed to it and a spacer sleeve (36) and
at least two area sections (6, 7) in parallel to each other, wherein a first one of the area sections (6) is provided with a first through hole (10) and a second one of the area sections (7) is provided with a second through hole (11), wherein a first bearing bushing (34a) is provided in the first through hole (10) and a second bearing bushing (34b) is provided in the second through hole (11), and wherein
the spacer sleeve (36) is disposed in the first bearing bushing (34a) and forms a first slide bearing in combination with the first bearing bushing (34a), and wherein
the bolt head (19) is disposed in the second bearing bushing (34b) and forms a second slide bearing in combination with the second bearing bushing (34b).

2. The securing element (1) according to claim 1 having at least one attenuation means (5) for attenuating impacts of the securing element (1) to the endless conveyor means (30).

3. The securing element (1) according to any of the preceding claims having at least one joint portion (2, 3) made from sheet metal.

4. The securing element (1) according to any of the preceding claims, comprising an at least partially U-shaped cross section.

5. A carriage (29) including a securing element (1) according to any of claims 1 to 4, which can be secured to an endless conveyor means (30) of a conveyor apparatus with the securing element (1), wherein the second joint portion (3) is coupled to a part (33) of the carriage (29).

6. The carriage (29) according to claim 5, comprising a sorting means or a transverse sorting means (31).

7. A conveyor apparatus having at least one endless conveyor means (30) and at least one carriage (29) according to any of claims 5 or 6, being secured to the endless conveyor means (30) by means of the securing element (1), wherein the endless conveyor means (30) is arranged for moving the carriage (29) along a predetermined conveying path.

8. A method for securing a carriage (29) to an endless conveyor means (30) of a conveyor apparatus, wherein a securing element according to any of claims 1 to 4 is provided, and a first one of the joint portions (2) of the securing element (1) is articulated at the endless conveyor means (30) and a second one of the joint portions (3) of the securing element (1) is coupled to the carriage (29) by means of at least one coupling means (32).

## Revendications

1. Elément de fixation (1) pour la fixation d'un chariot (29) à un moyen de transport sans fin (30) d'un dispositif de transport qui comprend au moins deux parties articulées (2, 3) connectées ensemble de manière articulée, dans lequel une première des parties articulées (2) est agencée pour l'articulation de l'élément de fixation (1) au moyen de transport sans fin (30) et une seconde des parties articulées (3) est agencée pour la connexion de l'élément de fixation (1) au chariot (29),
**caractérisé en ce que** l'élément de fixation (1) comprend au moins un élément de boulon longitudinal (4) qui présente une partie centrale (16), une section d'extrémité filetée (17) présentant un filetage, à l'opposé de celle-ci une tête de boulon (19) et un manchon d'écartement (36), et
au moins deux sections planes (6, 7) parallèles l'une à l'autre, dans lequel une première des sections planes (6) est pourvue d'un premier orifice de passage (10) et une seconde des sections planes (7) est pourvue d'un second orifice de passage (11), dans lequel un premier coussinet (34a) est prévu dans le premier orifice de passage (10) et un second coussinet (34b) est prévu dans le second orifice de passage (11), et dans lequel
le manchon d'écartement (36) est disposé dans le premier coussinet (34a) et forme avec le premier coussinet (34a) un premier palier lisse, et dans lequel la tête de boulon (19) est disposée dans le second coussinet (34b) et forme avec le second coussinet (34b) un second palier lisse.

2. Elément de fixation (1) selon la revendication 1 avec au moins un moyen d'amortissement (5) pour l'amortissement de frappes de l'élément de fixation (1) sur le moyen de transport sans fin (30).

3. Elément de fixation (1) selon une des revendications précédentes, dans lequel au moins une partie articulée (2, 3) est réalisée en un matériau de tôle.

4. Elément de fixation (1) selon une des revendications précédentes, qui présente au moins partiellement une section transversale en forme de U.

5. Chariot (29) avec un élément de fixation (1) selon une des revendications 1 à 4, qui peut être fixé avec l'élément de fixation (1) à un moyen de transport sans fin (30) d'un dispositif de transport, dans lequel la seconde partie articulée (3) est connectée à une partie (33) du chariot (29).

6. Chariot (29) selon la revendication 5, qui présente un dispositif de tri ou dispositif de tri transversal (31).

7. Dispositif de transport avec au moins un moyen de transport sans fin (30) et au moins un chariot (29) selon une des revendications 5 ou 6, qui est fixé avec l'élément de fixation (1) au moyen de transport sans fin (30), dans lequel le moyen de transport sans fin (30) est agencé pour déplacer le chariot (29) le long d'un parcours prédéfini.

8. Procédé de fixation d'un chariot (29) à un moyen de transport sans fin (30) d'un dispositif de transport, dans lequel un élément de fixation (1) selon une des revendications 1 à 4 est prévu, et une première des parties articulées (2) de l'élément de fixation (1) est connectée de manière articulée au moyen de transport sans fin (30) et une seconde des parties articulées (3) de l'élément de fixation (1) est connectée avec au moins un moyen de connexion (32) au chariot (29).
